# EUROPEAN PATENT SPECIFICATION

(11) **EP 4 261 052 B1**
(45) Date of publication and mention of the grant of the patent: **27.08.2025**
(21) Application number: 21903116.8
(22) Date of filing: 15.11.2021
(51) Int. Cl.: B60C 19/12, B29D 30/06, B60C 5/00

(54) **PNEUMATIC TIRE AND METHOD FOR PRODUCING SAME**
LUFTREIFEN UND VERFAHREN ZUR HERSTELLUNG DAVON
PNEUMATIQUE ET SON PROCÉDÉ DE PRODUCTION

(30) Priority: 08.12.2020 JP 2020203253
(43) Date of publication of application: 18.10.2023
(73) Proprietor: Toyo Tire Corporation, Itami-shi, Hyogo 664-0847 (JP)
(72) Inventor: MATSUNOBU Yuko, Itami-Shi, Hyogo 664-0847 (JP)
(74) Representative: Müller-Boré & Partner Patentanwälte PartG mbB
(86) International application number: PCT/JP2021/041856
(87) International publication number: WO 2022/124012

(56) References cited:
- EP-A1- 3 093 165
- EP-A1- 3 199 382
- EP-A2- 3 666 510
- WO-A1-2015/115486
- JP-A- 2020 093 546
- JP-A- S5 893 612
- US-A1- 2009 126 846

## Description

### TECHNICAL FIELD

The present invention relates to a pneumatic tire for vehicles and a method for producing this. The present invention is defined by the independent claims. Preferred examples are defined in the dependent claims.

### BACKGROUND ART

Conventionally, a pneumatic tire has been known which includes a puncture prevention function whereby a hole in the tire formed during puncture is automatically plugged by a sealant layer provided to the inner surface of the tire. For example, Patent Document 1 discloses a pneumatic tire in which a sealant layer is formed by a substantially cord-like sealant material arranged by continuously coating in a spiral shape along the tire inner surface, and a sound absorbing layer is provided to the inner side of the sealant layer.
EP 3 666 510 A2 describes a method for forming a sealant layer in a tire, which comprise steps of providing a tire and applying a plurality of strip-shaped windings of a sealant material to form a sealant layer to the inside of the tire under the crown of the tire.
EP 3 199 382 A1 describes a pneumatic tire including a sealant layer located radially inside an inner liner.

Patent Document 1: Japanese Patent No.6184523

### DISCLOSURE OF THE INVENTION

### Problems to be Solved by the Invention

When coating the sealant material in a spiral shape, an area in which sealant material overlaps exists long in the circumferential direction, at both ends in the tire-width direction, which is an initial circling portion and a final circling portion. If the overlap area of the sealant material is large, defects will arise such as variation in the thickness of the sealant layer increasing, and leading to a decline in the adhesiveness of the sound absorbing layer to the sealant layer.

The present invention has been made taking account of the above situation, and has an object of providing a pneumatic tire and a method for producing the same whereby an overlap area of a sealant material decreases, variation in thickness of the sealant layer is suppressed, and an improvement in adhesiveness of a sound absorbing layer to the sealant layer is achieved.

According to the present invention, it is possible to provide a pneumatic tire and a method for producing the same whereby an overlap area of a sealant material decreases, variation in thickness of the sealant layer is suppressed, and an improvement in adhesiveness of a sound absorbing layer to the sealant layer is achieved.

### BRIEF DESCRIPTION OF THE DRAWINGS

Fig. 1 is a cross-sectional view in a tire-width direction of the tire according to an embodiment of the present invention;
Fig. 2 is a development view showing an inner surface of the tire according to the embodiment of the present invention, and schematically showing a sealant layer and sound absorbing layer;
Fig. 3 is a view schematically showing a state of coating a sealant material on a tire inner surface by a nozzle, upon producing the tire according to the embodiment of the present invention; and
Fig. 4 is a development view of a tire inner surface schematically showing a conventional example of pasting a sealant material in a spiral shape onto the tire inner surface.

### PREFERRED MODE FOR CARRYING OUT THE INVENTION

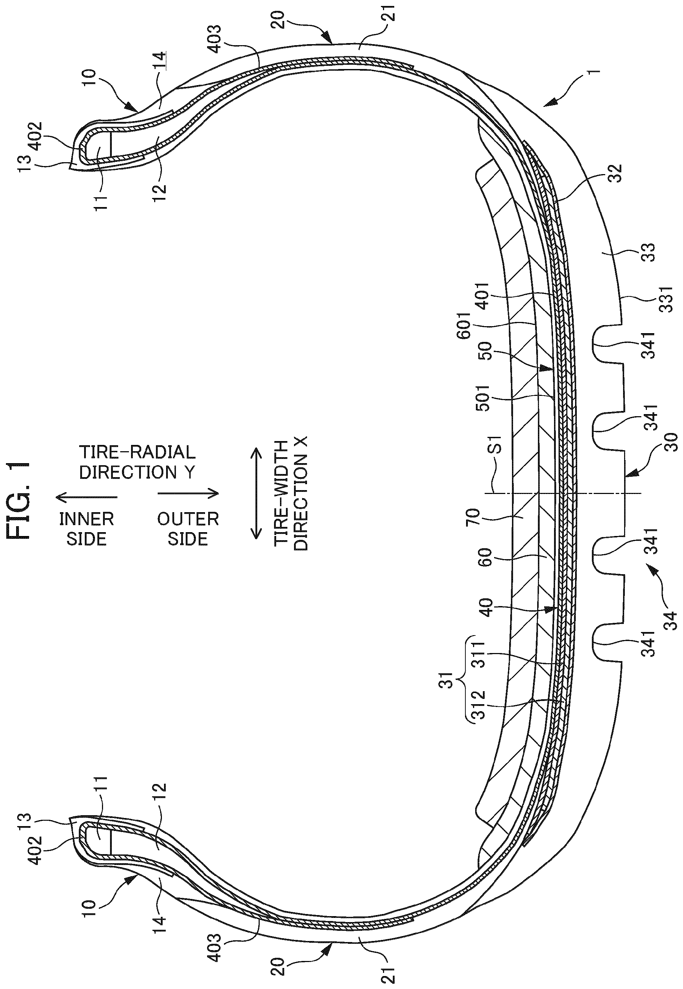

Hereinafter, an embodiment will be explained while referencing the drawings. Fig. 1 is a view showing a tire-width direction cross section of a tire 1, which is a pneumatic tire according to the present embodiment. The tire 1 is a tire for a passenger vehicle, for example. The specific structure of the tire 1 is left/right symmetrical in a cross section in the tire-width direction. In the drawings, reference symbol S1 is a tire equatorial plane. The tire equatorial plane S1 is a plane intersecting a tire rotational axis (tire meridian axis), and is positioned at the center in the tire-width direction.

It should be noted that the cross-sectional view of Fig. 1 is a tire-width direction cross-sectional view (tire meridian axis cross-sectional view) of an unloaded state in which the tire 1 is mounted to a standard rim and filled with standard internal pressure. It should be noted that standard rim indicates a rim serving as a standard decided by JATMA corresponding to the tire size. In addition, standard internal pressure is 180 kPa in the case of the tire being for a passenger vehicle, for example.

Herein, tire-width direction is a direction parallel to the tire rotational axis, and is the left/right direction in the paper plane in the cross-sectional view of Fig. 1. In Fig. 1, it is illustrated as the tire-width direction X. Then, the tire-width direction inner side is a direction near the tire equatorial plane S1, and is the central side in the paper plane of Fig. 1. Tire-width direction outer side is a direction distanced from the tire equatorial plane S1, and is the left side and right side in the paper plane of Fig. 1. In addition, tire-radial direction is a direction perpendicular to the tire rotational axis, and is the vertical direction in Fig. 1. In Fig. 1, it is illustrated as the tire-radial direction Y. Then, a tire-radial direction outer side is a direction distanced from the tire rotational axis, and is a lower side in the paper plane of Fig. 1. Tire-radial direction inner side is a direction approaching the tire rotational axis, and is an upper side in the paper plane of Fig. 1.

As shown in Fig. 1, the tire 1 includes: a pair of beads 10 provided at both sides in the tire-width direction; a pair of sidewalls 20 extending from each of the pair of beads 10 to the outer side in the tire-radial direction; tread 30 arranged between the pair of sidewalls 20; a carcass ply 40 arranged between the pair of beads 10; and an inner liner 50 arranged on the tire inner cavity side of the carcass ply 40.

The bead 10 includes a bead core 11, bead filler 12 extending in the tire-radial direction outer side of the bead core 11, a chafer 13, and rim strip rubber 14.

The bead core 11 is an annular member formed by winding a bead wire made of metal covered with rubber around several times, and is a member playing the role of fixing the tire 1 filled with air to the rim. The bead filler 12 is a rubber member which takes on a tapered shape as extending to the outer side in the tire radial direction. The bead filler 12 is a member provided to raise the rigidity of a circumferential portion of the bead 10, and ensure high maneuverability and stability. The bead filler 12, for example, is configured from rubber having higher hardness than the surrounding rubber members.

The chafer 13 is provided to the inner side in the tire-radial direction of the carcass ply 40 provided around the bead core 11. The rim strip rubber 14 is arranged on the outer side in the tire-width direction of the chafer 13 and carcass ply 40. The rim strip rubber 14 is a member which contacts the rim to which the tire 1 is mounted.

The sidewall 20 includes sidewall rubber 21 arranged on the outer side in the tire-width direction of the carcass ply 40. The sidewall rubber 21 configures an outer wall surface of the tire 1. The sidewall rubber 21 is a portion which bends the most upon the tire 1 exhibiting a cushioning action, and usually flexible rubber having fatigue resistance is adopted therein.

The tread 30 includes an endless belt 31 and cap ply 32, and tread rubber 33.

The belt 31 is arranged at an outer side in the tire-radial direction of the carcass ply 40. The cap ply 32 is arranged at an outer side in the tire-radial direction of the belt 31. The belt 31 is a member reinforcing the tread 30. The belt 31 in the present embodiment is a two-layer structure including a belt 311 on the inner side and a belt 312 on the outer side. The belt 311 on the inner side and the belt 312 on the outer side both have a structure in which a plurality of cords such as steel cords is covered with rubber. It should be noted that the belt 31 is not limited to a two-layer structure, and may have a structure of one layer or three or more layers.

The cap ply 32 is a member reinforcing the tread 30 together with the belt 31. The cap ply 32, for example, has a structure in which a plurality of organic fiber cords having an insulation property such as polyimide fibers is covered with rubber. By providing the cap ply 32, it is possible to achieve an improvement in durability and a reduction in road noise during travel.

The tread rubber 33 is arranged on the outer side in the tire-radial direction of the cap ply 32. The tread rubber 33 is a member constituting the tire tread (contact surface with road surface) 331 during normal travel. A tread pattern 34 configured by a plurality of grooves, for example, is provided in the tire tread 331 of the tread rubber 33. The tread pattern 34 has a plurality of main grooves 341 aligned in the tire-width direction. Each of the plurality of main grooves 341 extends along the tire circumferential direction.

The carcass ply 40 configures a ply serving as the backbone of the tire 1. The carcass ply 40 is embedded within the tire 1, in a form passing through the pair of sidewalls 20 and the tread 30 between the pair of beads 10. The carcass ply 40 includes a plurality of carcass cords serving as the backbone of the tire 1. The plurality of carcass cords extends in the tire-width direction, for example, and are arranged side by side in the tire-circumferential direction. This carcass cord is configured from an insulative organic fiber cord such as polyester or polyamide, or the like. The plurality of carcass cords is coated by rubber, whereby the carcass ply 40 is configured.

The carcass ply 40 includes a ply main body part 401 which extends from one bead core 11 to the other bead core 11, and extends between the tread 30 and bead 10; a pair of elbow-shaped bends 402 which fold back from the ply main body part 401 at the bead core 11; and a pair of folding parts 403 which extend from each of the elbow-shaped bends 402 to an outer side in the tire-radial direction. The ply main body part 401, the elbow-shaped bend 402 and folding part 403 are continuous.

The ply main body part 401 is arranged at the inner side in the tire-width direction of the bead core 11 and bead filler 12 on the inner side in the tire-radial direction The folding part 403 is arranged at the outer side in the tire-width direction of the bead core 11 and bead filler 12 at the inner side in the tire-radial direction. In a portion other than the bead core 11 and bead filler 12, the folding part 403 is overlapped with the ply main body part 401. The elbow-shaped bend 402 configures a portion most to the inner side in the tire-radial direction of the carcass ply 40.

The carcass ply 40 of the present embodiment is a one-layer structure; however, the carcass ply 40 is not limited to a one-layer structure, and may have a two-layer or three or more layer-structure.

The aforementioned chafer 13 of the bead 10 is provided so as to surround the end on the inner side in the tire-radial direction of the carcass ply 40 including the elbow-shaped bend 402. In addition, the rim strip rubber 14 is arranged at the outer side in the tire-width direction of the chafer 13 and the folding part 403 of the carcass ply 40. The end on the outer side in the tire-radial direction of the rim strip rubber 14 is covered by the aforementioned sidewall rubber 21.

The inner liner 50 covers the tire inner surface between the pair of beads. The inner liner 50 covers the inner surface of the ply main body part 401 of the carcass ply 40 and the inner surface of the chafer 13 of the pair of beads 10. The inner liner 50 is configured by air permeation resistant rubber, whereby the air inside the tire inner cavity is prevented from leaking to outside.

As shown in Fig. 1, the tire 1 according to the present embodiment further includes the sealant layer 60 and sound absorbing layer 70.

The sealant layer 60 is arranged at the inner surface 501 on the tire inner cavity side corresponding to at least the tread 30 of the inner liner 50. The width of the sealant layer 60, i.e. length dimension in the tire-width direction, is set to about 1.1 times the width of the tire tread 331 of the tread 30 serving as the contact width of the tire 1, for example. The sealant layer 60 may be arranged so as to overhang from the tread 30 to the outer side in the tire-width direction, and include part on the side of the tread 30 of the sidewall 20. The sealant layer 60 is pasted to the inner liner 50 by the stickiness inherent thereto. The thickness of the sealant layer 60 is on the order of 1 mm or greater and 10 mm or less, for example. The sound absorbing layer 70 is arranged at the inner surface 601 on the tire inner cavity side of the sealant layer 60. The sound absorbing layer 70 is pasted to the sealant layer 60 by way of the stickiness of the sealant layer 60.

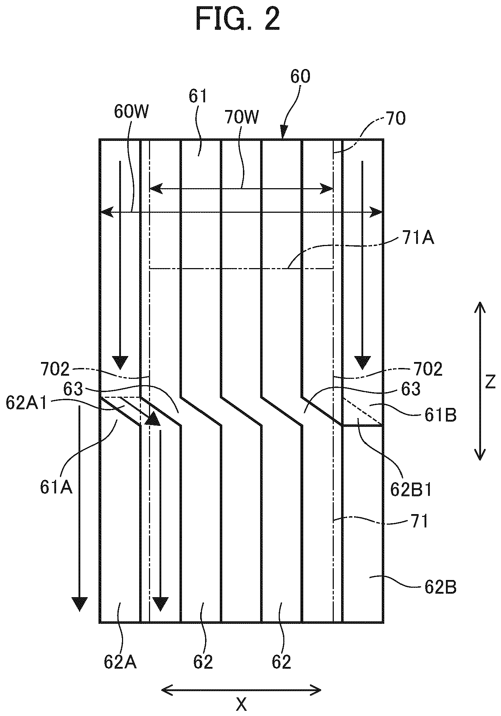

Fig. 2 is a development view showing the inner surface of the tire 1, and schematically shows the sealant layer 60 and sound absorbing layer 70 provided to the inner surface of the tire 1. Fig. 2 shows the tire-width direction by the arrow X, and shows the tire-circumferential direction by the arrow Z.

As shown in Fig. 2, the sealant layer 60 is formed from one belt-like sealant material 61 pasted while circling along the tire-circumferential direction to the inner surface 501 of the inner liner 50. The sealant layer 60 has a plurality of annular circling parts 62 and a plurality of transition parts 63 formed by the sealant material 61.

In Fig. 2, the reference symbol 61A indicates the pasting starting end of the sealant material 61, and reference symbol 61B indicates the pasting finishing end of the sealant material 61. As shown in Fig. 2, the sealant material 61 is continuously pasted from one end side in the tire-width direction to the other end side (left side to right side in Fig. 2), while circling to configure as shown by the arrow in the middle drawing, from the pasting starting end 61A until the pasting finishing end 61B.

The circling part 62 is formed by the sealant material 61 being pasted on the inner surface 501 of the inner liner 50 in parallel to the tire-circumferential direction. A plurality of circling parts 62 are arranged in parallel so as to be adjacent in a state in close proximity with each other in the tire-width direction. The plurality of transition parts 63 slope with a predetermined angle relative to the tire-circumferential direction, and are arranged in parallel so as to be adjacent in a state in close proximity with each other.

The transition part 63 is provided to a part in the tire-circumferential direction of the circling part 62. The transition part 63 is a portion at which the sealant material 61 transitions to one side in the tire-width direction (right side in Fig. 2), after one circling part 62 is formed by the sealant material 61 being pasted approximately once around the inner surface 501 of the inner liner 50. In other words, the transition part 63 is a portion provided to part of the circling part 62, and connects adjacent circling parts 62 in the tire-width direction to form an angle relative to the tire-circumferential direction. The next circling part 62 is pasted adjacent on one side in the tire-width direction of the already pasted circling part 62 through the transition part 63. The next circling part 62 adjacent on one side in the tire-width direction through the transition part 63 is repeatedly formed, whereby the sealant layer 60 is provided. In the present embodiment, the plurality of transition parts 63 are respectively arranged at approximately the same position in the tire-circumferential direction, and arranged in parallel in the tire-width direction.

In this way, upon pasting the sealant material 61 to the tire inner surface, the pasting method of sequentially pasting in the tire-width direction the circling parts 62 parallel in the tire-circumferential direction while passing through the transition parts 63 may be referred to as step pasting below.

As the sealant material 61, for example, it is possible to use a sealing member having stickiness made by blending a plasticizer such as polyisobutylene and polybutene, a tackifier such as a thermoplastic olefin/diolefin copolymer, and a filler such as carbon black and silica, into unvulcanized or semi-vulcanized butyl rubber, for example. It should be noted that, not limiting thereto, the sealant material 61 may be another known sealing member that is being used conventionally.

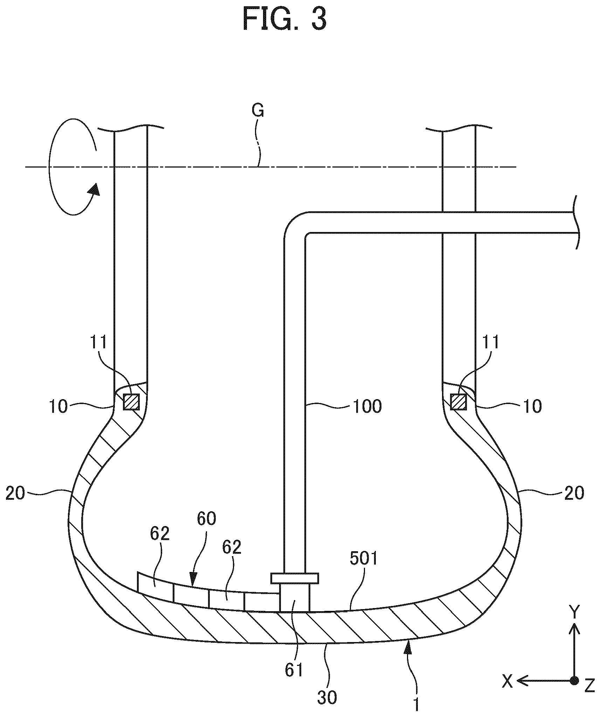

Next, the method of producing the tire according to the present embodiment including step pasting the sealant material 61 will be explained. To step paste the sealant material 61, it is possible to perform by discharging and coating the sealant material 61 onto the inner surface 501 of the inner liner 50, which is the inner surface of the tire 1, from the nozzle 100, while rotating the tire 1 around its axis, and moving the nozzle 100 in the tire-width direction, as shown in Fig. 3. The nozzle 100 is attached to the leading end of an extruder (not shown), and is inserted to the inner side of the tire 1. The sealant material 61 extruded from this extruder is discharged and coated on the inner surface of the tire 1 from the leading end of the nozzle 100. In Fig. 3, the width-direction cross section of the tire 1 is shown, and the tire-width direction X, tire-radial direction Y and tire-circumferential direction Z are each shown. In Fig. 3, the reference symbol G is the axis of rotation of the tire 1.

One circling part 62 is coated by rotating the tire 1 approximately one time in a state stopping movement in the tire-width direction, while discharging the sealant material 61 continuously from the nozzle 100, and while continuously rotating the tire 1 around its axis. Next, when moving the nozzle 100 to one side in the tire-width direction by the width of the sealant material 61, the transition part 63 is coated meanwhile. Next, the movement in the tire-width direction is stopped, and the circling part 62 next to the previously coated circling part 62 is coated. By repeating the above operation, it is possible to step paste the sealant material 61 onto the formation area of the sealant layer 60. When coating and pasting the sealant material 61 to the entirety of the formation area of the sealant layer 60, discharge of sealant material 61 from the nozzle 100 stops. The sealant layer 60 is formed by the sealant material 61 in this way, and the sound absorbing layer 70 is subsequently arranged on the tire inner cavity side of the sealant layer 60.

In the case of the sealant material 61 being step pasted to the inner surface 501 of the inner liner 50 in the above way, the initial circling part 62A on one end side in the tire-width direction (left side in Fig. 2) formed first among the plurality of circling part 62 has a first circling overlap part 62A1 which overlaps in the tire-thickness direction at the transition part 63 to the next circling part 62 from the initial circling part 62A, as shown in Fig. 2. In addition, the finishing circling part 62B on the other end side in the tire-width direction (right side in Fig. 2) formed last has a circling overlap part 62B1 which overlaps in the tire-thickness direction with the transition part 63 transitioning to the finishing circling part 62B. The first circling overlap part 62A1 is a portion at which the transition part 63 overlaps over the pasting start end 61A. The second circling overlap part 62B1 is a portion at which the pasting finish end 61B overlaps over the transition part 63.

The sound absorbing layer 70 is formed with a sound absorbing material 71 consisting of sponge or the like formed with foaming material. The sound absorbing material 71 is an interconnecting foam body including several pores, and having permeability with outside air. As such a material, for example, flexible urethane foam can be exemplified.

The sound absorbing layer 70 is pasted by at least one sheet of sound absorbing material 71 being wound in a ring shape on the inner surface 601 of the sealant layer 60. As shown in Fig. 2, the sound absorbing material 71 has a joint 71A at which circulation-direction ends opposing each other are joined. It should be noted that the sound absorbing layer 70 may be configured by at least two sound absorbing materials 71 being arranged in a state linked in a ring shape.

As characteristics of the sound absorbing material 71, from the viewpoint of weight balance of the pneumatic tire, it preferably has density no greater than 60 kg/m³, and more preferably has density no greater than 40 kg/m³. In addition, the sound absorbing material 71, from the viewpoint of durability, preferably has a tensile strength of at least 30 kPA, and a tear strength of at least 2.0 N/cm (JIS K6400-5).

The dimension 70W in the tire-width direction of the sound absorbing layer 70 is preferably at least 90% to 100% relative to the dimension 60W in the tire-width direction of the sealant layer 60. Then, the sound absorbing layer 70 is preferably arranged so as to fit within the tire-width direction of the sealant layer 60. Furthermore, each of both tire-width direction ends 702 of the sound absorbing layer 70 is preferably located more to the inner side in the tire-radial direction than the first circling overlap part 62A1 and second circling overlap part 62B1 of the sealant layer 60, and not overlapping each other.

In addition, it is preferable for the position of the joint 71A of the sound absorbing layer 70 and the position of the first circling overlap part 62A1 and second circling overlap part 62B1 of the sealant layer 60 to be shifted in the tire-circumferential direction and not to overlap each other.

According to the tire 1 of the aforementioned embodiment, in the case of a nail or the like poking the tread 30, for example, and a hole that reaches the sealant layer 60 occurring, this hole is automatically plugged by the sealant layer 60, and the puncture is prevented before it happens. In addition, the road noise during travel is absorbed by the sound absorbing layer 70 and decreases.

According to the tire 1 of the present embodiment explained above, the following effects are exerted.

Since the overlap area of the sealant material 61 drastically decreases compared to a conventional case of winding in a spiral shape, in the sealant layer 60, variation is thickness is suppressed, and unevenness decreases, whereby an improvement in adhesion of the sound absorbing layer 70 to the sealant layer 60 is achieved.

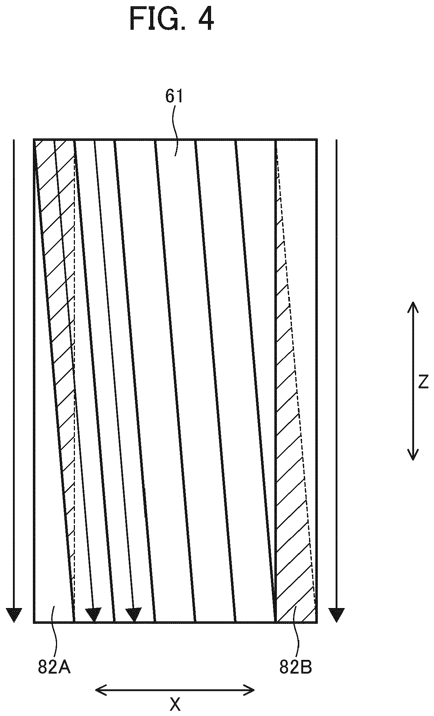

Fig. 4 shows an example of coating the sealant material 61 in a spiral shape. According to this, the region in which adjacent sealant material 61 wound in a spiral shape overlap (shown by the hatched area in the drawing) exist long in the circumferential direction, in the initial circling part 82A along the tire-circumferential direction on the left end in the tire-width direction in the drawing, and the final circling part 82B along the tire-circumferential direction on the right end. If the overlap area of the sealant material 61 is large in this way, defects arise such that the variation in thickness of the sealant layer becomes greater, and leads to a decline in adhesiveness of the sound absorbing layer to the sealant layer. In contrast, by performing step pasting which aligns in the tire-width direction the circling parts 62 parallel to the tire-circumferential direction, without circling the sealant material 61 in a spiral shape in the present embodiment, it is possible to drastically decrease the overlap area of the sealant material 61 in the aforementioned way.

According to the tire 1 explained above, it is possible to reduce the surface area of a portion not covered by the sound absorbing layer 70 of the sealant layer 60, and possible to suppress clinging of debris to the sealant layer 60 having stickiness. In addition, since the tire-width direction end of the sound absorbing layer 70 clings to the sealant layer 60, the sound absorbing layer 70 hardly peels from the sealant layer 60, and the sound absorbing performance is maintained.

Since the joint part 71A of the sound absorbing layer 70, and first circling overlap part 62A1 and second circling overlap part 62B1 of the sealant layer 60 do not overlap, the joint part 71A of the sound absorbing layer 70 will hardly peel from the sealant layer 60, and adhesiveness of the sound absorbing layer 70 to the sealant layer 60 is maintained.

Since both tire-width direction ends 702 of the sound absorbing layer 70 do not overlap the first circling overlap part 62A1 and second circling overlap part 62B1 of the sealant layer 60, both tire-width direction ends 702 of the sound absorbing layer 70 will hardly peel from the sealant layer 60, and adhesiveness of the sound absorbing layer 70 to the sealant layer 60 is maintained.

Since the overlap area of the sealant material 61 in the sealant layer 60 drastically decreases compared to the conventional case of winding in a spiral shape, variation in thickness is suppressed, and unevenness decreases, whereby an improvement in adhesion of the sound absorbing layer 70 to the sealant layer 60 is achieved.

Although a specific embodiment of the present invention has been explained above, the present invention is not limited to the above embodiment. For example, the plurality of circling parts 62 of the sealant layer 60 are formed by circling around once the sealant material 61 and pasting; however, it may be configured to obtain a predetermined thickness with the circling number as a few times. In addition, it may be a mode in which the sound absorbing material 71 forming the sound absorbing layer 70 joins a plurality of pieces divided in the tire-radial direction. In the case of step pasting the sealant material 61 to form a plurality of circling parts 62, the tire 1 may be moved in the tire-width direction, or both the tire 1 and nozzle 131 maybe moved in the tire-width direction, instead of moving the nozzle 100 in the tire-width direction.

### EXPLANATION OF REFERENCE NUMERALS

1 tire (pneumatic tire)
10 bead
20 sidewall
30 tread
40 carcass ply
50 inner liner
60 sealant layer
61 sealant material
62 circling part
62A initial circling part
62A1 first circling overlap part
62B final circling part
62B1 second circling overlap part
63 transition part
70 sound absorbing layer
71A joint

## Claims

1. A pneumatic tire (1) comprising:
a pair of beads (10);
a pair of sidewalls (20) extending from each of the pair of beads (10) to an outer side in a tire-radial direction;
a tread (30) disposed between the pair of sidewalls (20);
a carcass ply (40) bridged between the pair of beads (10);
an inner liner (50) disposed at a tire inner cavity side of the carcass ply (40); and
a sealant layer (60) disposed at an inner surface (501) of the tire inner cavity side corresponding to at least the tread (30) of the inner liner (50),
wherein the sealant layer (60) is formed from a belt-like sealant material (61) pasted while circling the inner surface (501) of the inner liner (50),
wherein the sealant layer (60) includes: a plurality of annular circling parts (62) parallel to a tire-circumferential direction in which the sealant material (61) is disposed in parallel in a state adjacent in the tire-width direction, and
a plurality of transition parts (63) provided to a part in the tire-circumferential direction of the circling part (62), and at which the sealant material (61) transitions to the circling part (62) adjacent at one side in the tire-width direction, and
wherein an initial circling part (62A) on one end side in the tire-width direction and a final circling part (62B) on another end side in the tire-width direction among the plurality of circling parts (62) respectively have a circling overlap part (62A1, 62B1) which overlap in the tire-thickness direction at the transition part (63),
**characterized in that**
the pneumatic tire (1) further comprises a sound absorbing layer (70) disposed at a tire inner cavity side of the sealant layer (60),
wherein the sound absorbing layer (70) is formed from a sound absorbing material (71) wound along the tire-circumferential direction on an inner surface (601) of the sealant layer (60) and having a joint part (71A) at which circumferential-direction ends opposing each other join,
wherein positions of the joint part (71A) and the circling overlap part (62A1, 62B1) differ in the tire-circumferential direction, and
wherein both tire-width direction ends of the sound absorbing layer (70) are located more to an inner side in the tire-width direction than the circling overlap part (62A1, 62B1) .

2. The pneumatic tire (1) according to claim 1, wherein a dimension in the tire-width direction of the sound absorbing layer (70) is at least 90% to 100% relative to a dimension in the tire-width direction of the sealant layer (60), and the sound absorbing layer (70) is disposed so as to fit within the tire-width direction of the sealant layer (60).

3. The pneumatic tire (1) according to claim 1 or 2, wherein a plurality of the transition parts (63) are respectively disposed at substantially the same position in the tire-circumferential direction, and disposed in parallel in the tire-width direction.

4. A method for producing a pneumatic tire (1) which forms a sealant layer (60) on an inner surface (501) of a tire (1), and then disposes a sound absorbing layer (70) on a tire inner cavity side of the sealant layer (60), the method comprising:
forming a sealant layer,
while continuously rotating the tire (1) around its axis upon forming the sealant layer (60),
by repeating an operation of discharging a sealant material (61) from a nozzle (100) disposed at the tire inner cavity side onto an inner surface (501) of the tire to form annular circling parts (62) parallel to a tire-circumferential direction from the sealant material (61), then relatively moving the nozzle (100) in the tire-width direction relative to the tire (1), while discharging the sealant material (61) from the nozzle (100), followed by discharging the sealant material (61) from the nozzle (100) onto the inner surface (501) of the tire (1), thereby forming from the sealant material (61), on one side in the tire-width direction of said circling part (62), a next circling part (62) adjacent to said circling part (62) to form on an inner surface (501) of the tire (1) a sealant layer (60) in which a plurality of the circling parts (62) are arranged in parallel in the tire-width direction,
wherein an initial circling part (62A) on one end side in the tire-width direction and a final circling part (62B) on another end side in the tire-width direction among the plurality of circling parts (62) respectively have a circling overlap part (62A1, 62B1) which overlap in the tire-thickness direction at the transition part (63),
wherein the sound absorbing layer (70) is formed from a sound absorbing material (71) wound along the tire-circumferential direction on an inner surface (601) of the sealant layer (60) and having a joint part (71A) at which circumferential-direction ends opposing each other join,
wherein positions of the joint part (71A) and the circling overlap part (62A1, 62B1) differ in the tire-circumferential direction, and
wherein both tire-width direction ends of the sound absorbing layer (70) are located more to an inner side in the tire-width direction than the circling overlap part (62A1, 62B1) .

## Patentansprüche

1. Luftreifen (1), umfassend:
ein Paar Wülste (10);
ein Paar Seitenwände (20), das sich von jedem des Paars Wülste (10) zu einer Außenseite in einer Reifenradialrichtung erstreckt;
eine Lauffläche (30), die zwischen dem Paar Seitenwände (20) angeordnet ist;
eine Karkassenlage (40), die zwischen dem Paar Wülste (10) überbrückt ist;
einen Innengummi (50), die an einer Reifeninnenhohlraumseite der Karkassenlage (40) angeordnet ist; und
eine Dichtungsschicht (60), die an einer Innenoberfläche (501) der Reifeninnenhohlraumseite angeordnet ist, die mindestens der Lauffläche (30) des Innengummis (50) entspricht,
wobei die Dichtungsschicht (60) aus einem bandförmigen Dichtungsmaterial (61) ausgebildet ist, das während eines Umlaufens der Innenoberfläche (501) des Innengummis (50) aufgetragen wird,
wobei die Dichtungsschicht (60) einschließt: eine Vielzahl von parallel zu einer Reifenumfangsrichtung ringförmig umlaufenden Teilen (62), in denen das Dichtungsmaterial (61) parallel in einem Zustand angrenzend in der Reifenbreitenrichtung angeordnet ist, und
eine Vielzahl von Übergangsteilen (63), die an einem Teil in der Reifenumfangsrichtung des umlaufenden Teils (62) bereitgestellt sind und an denen das Dichtungsmaterial (61) in den umlaufenden Teil (62) übergeht, der an einer Seite in der Reifenbreitenrichtung angrenzt, und
wobei ein anfänglicher umlaufender Teil (62A) an einer Endseite in der Reifenbreitenrichtung und ein letzter umlaufender Teil (62B) an einer anderen Endseite in der Reifenbreitenrichtung unter der Vielzahl von umlaufenden Teilen (62) jeweils einen umlaufenden Überlappungsteil (62A1, 62B1) aufweisen, die sich in der Reifendickenrichtung an dem Übergangsteil (63) überlappen,
**dadurch gekennzeichnet, dass**
der Luftreifen (1) ferner eine schallabsorbierende Schicht (70) umfasst, die auf einer Reifeninnenhohlraumseite der Dichtungsschicht (60) angeordnet ist,
wobei die schallabsorbierende Schicht (70) aus einem schallabsorbierenden Material (71) ausgebildet ist, das entlang der Reifenumfangsrichtung auf eine Innenoberfläche (601) der Dichtungsschicht (60) gewickelt ist und einen Verbindungsteil (71A) aufweist, an dem sich in Umfangsrichtung einander gegenüberliegende Enden treffen,
wobei sich die Positionen des Verbindungsteils (71A) und des umlaufenden Überlappungsteils (62A1, 62B1) in der Reifenumfangsrichtung unterscheiden, und
wobei sich beide in der Reifenbreitenrichtung verlaufenden Enden der schallabsorbierenden Schicht (70) in der Reifenbreitenrichtung weiter auf einer Innenseite befinden als der umlaufende Überlappungsteil (62A1, 62B1).

2. Luftreifen (1) nach Anspruch 1, wobei eine Abmessung der schallabsorbierenden Schicht (70) in der Reifenbreitenrichtung mindestens 90 % bis 100 % relativ zu einer Abmessung der Dichtungsschicht (60) in der Reifenbreitenrichtung ist und die schallabsorbierende Schicht (70) so angeordnet ist, dass sie innerhalb der Reifenbreitenrichtung der Dichtungsschicht (60) passt.

3. Luftreifen (1) nach Anspruch 1 oder 2, wobei eine Vielzahl der Übergangsteile (63) jeweils an im Wesentlichen derselben Position in der Reifenumfangsrichtung angeordnet und parallel in der Reifenbreitenrichtung angeordnet sind.

4. Verfahren zum Herstellen eines Luftreifens (1), das eine Dichtungsschicht (60) auf einer Innenoberfläche (501) eines Reifens (1) ausbildet und dann eine schallabsorbierende Schicht (70) auf einer Reifeninnenhohlraumseite der Dichtungsschicht (60) anordnet, das Verfahren umfassend: Ausbilden einer Dichtungsschicht,
während der Reifen (1) nach dem Ausbilden der Dichtungsschicht (60) kontinuierlich um seine Achse gedreht wird,
durch ein Wiederholen eines Vorgangs eines Austragens eines Dichtungsmaterials (61) aus einer Düse (100), die an der Reifeninnenhohlraumseite auf einer Innenoberfläche (501) des Reifens angeordnet ist, um aus dem Dichtungsmaterial (61) ringförmige umlaufende Teile (62) parallel zu einer Reifenumfangsrichtung auszubilden, dann die Düse (100) in der Reifenbreitenrichtung relativ zu dem Reifen (1) relativ zu bewegen, während das Dichtungsmaterial (61) aus der Düse (100) ausgetragen wird, gefolgt von dem Austragen des Dichtungsmaterials (61) aus der Düse (100) auf die Innenoberfläche (501) des Reifens (1), wobei dadurch aus dem Dichtungsmaterial (61), auf einer Seite in der Reifenbreitenrichtung des umlaufenden Teils (62), ein nächster umlaufender Teil (62) angrenzend an den umlaufenden Teil (62) ausgebildet wird, um auf einer Innenoberfläche (501) des Reifens (1) eine Dichtungsschicht (60) auszubilden, in der eine Vielzahl der umlaufenden Teile (62) parallel in der Reifenbreitenrichtung angeordnet sind,
wobei ein anfänglicher umlaufender Teil (62A) an einer Endseite in der Reifenbreitenrichtung und ein letzter umlaufender Teil (62B) an einer anderen Endseite in der Reifenbreitenrichtung unter der Vielzahl von umlaufenden Teilen (62) jeweils einen umlaufenden Überlappungsteil (62A1, 62B1) aufweisen, die sich in der Reifendickenrichtung an dem Übergangsteil (63) überlappen,
wobei die schallabsorbierende Schicht (70) aus einem schallabsorbierenden Material (71) ausgebildet ist, das entlang der Reifenumfangsrichtung auf eine Innenoberfläche (601) der Dichtungsschicht (60) gewickelt ist und einen Verbindungsteil (71A) aufweist, an dem sich in Umfangsrichtung einander gegenüberliegende Enden treffen,
wobei sich die Positionen des Verbindungsteils (71A) und des umlaufenden Überlappungsteils (62A1, 62B1) in der Reifenumfangsrichtung unterscheiden, und
wobei sich beide in der Reifenbreitenrichtung verlaufenden Enden der schallabsorbierenden Schicht (70) in der Reifenbreitenrichtung weiter auf einer Innenseite befinden als der umlaufende Überlappungsteil (62A1, 62B1).

## Revendications

1. Pneumatique (1) comprenant :
une paire de talons (10) ;
une paire de flancs (20) s'étendant depuis chaque talon de la paire de talons (10) jusqu'à un côté extérieur dans une direction radiale de pneumatique ;
une bande de roulement (30) disposée entre la paire de flancs (20) ;
une toile de carcasse (40) s'étendant entre la paire de talons (10) ;
un revêtement intérieur (50) disposé au niveau d'un côté de cavité intérieure de pneumatique de la toile de carcasse (40) ; et
une couche d'étanchéité (60) disposée au niveau d'une surface intérieure (501) du côté de cavité intérieure de pneumatique correspondant au moins à la bande de roulement (30) du revêtement intérieur (50),
dans lequel la couche d'étanchéité (60) est formée à partir d'un matériau d'étanchéité en forme de ceinture (61) collé tout en faisant le tour de la surface intérieure (501) du revêtement intérieur (50),
dans lequel la couche d'étanchéité (60) comporte : une pluralité de parties circulaires (62) annulaires parallèles à une direction circonférentielle de pneumatique dans laquelle le matériau d'étanchéité (61) est disposé parallèlement dans un état adjacent dans la direction de largeur de pneumatique, et
une pluralité de parties de transition (63) fournies à une partie dans la direction circonférentielle de pneumatique de la partie circulaire (62), et au niveau desquelles le matériau d'étanchéité (61) transitionne vers la partie circulaire (62) adjacente à un côté dans la direction de largeur de pneumatique, et
dans lequel une partie circulaire initiale (62A) sur un côté d'extrémité dans la direction de largeur de pneumatique et une partie circulaire finale (62B) sur un autre côté d'extrémité dans la direction de largeur de pneumatique parmi la pluralité de parties circulaires (62) ont respectivement une partie circulaire de chevauchement (62A1, 62B1) qui se chevauchent dans la direction d'épaisseur de pneumatique au niveau de la partie de transition (63),
**caractérisé en ce que**
le pneumatique (1) comprend en outre une couche d'absorption acoustique (70) disposée au niveau d'un côté de cavité intérieure de pneumatique de la couche d'étanchéité (60),
dans lequel la couche d'absorption acoustique (70) est formée à partir d'un matériau d'absorption acoustique (71) enroulé le long de la direction circonférentielle de pneumatique sur une surface intérieure (601) de la couche d'étanchéité (60) et ayant une partie de jonction (71A) au niveau de laquelle se joignent des extrémités opposées l'une à l'autre dans la direction circonférentielle,
dans lequel des positions de la partie de jonction (71A) et de la partie circulaire de chevauchement (62A1, 62B1) diffèrent dans la direction circonférentielle de pneumatique, et
dans lequel les deux extrémités de la couche d'absorption acoustique (70) dans la direction de largeur de pneumatique sont situées plus vers un côté intérieur dans la direction de largeur de pneumatique que la partie circulaire de chevauchement (62A1, 62B1).

2. Pneumatique (1) selon la revendication 1, dans lequel une dimension dans la direction de largeur de pneumatique de la couche d'absorption acoustique (70) va d'au moins 90 % à 100 % par rapport à une dimension dans la direction de largeur de pneumatique de la couche d'étanchéité (60), et la couche d'absorption acoustique (70) est disposée de manière à s'insérer dans la direction de largeur de pneumatique de la couche d'étanchéité (60).

3. Pneumatique (1) selon la revendication 1 ou 2, dans lequel une pluralité des parties de transition (63) sont respectivement disposées à sensiblement la même position dans la direction circonférentielle de pneumatique, et sont disposées parallèlement dans la direction de largeur de pneumatique.

4. Procédé pour la production d'un pneumatique (1) qui forme une couche d'étanchéité (60) sur une surface intérieure (501) d'un pneumatique (1), puis dispose une couche d'absorption acoustique (70) sur un côté de cavité intérieure de pneumatique de la couche d'étanchéité (60), le procédé comprenant : la formation d'une couche d'étanchéité,
tout en faisant tourner en continu le pneumatique (1) autour de son axe lors de la formation de la couche d'étanchéité (60),
en répétant une opération de déversement d'un matériau d'étanchéité (61) à partir d'une buse (100) disposée au niveau d'côté de cavité intérieure de pneumatique sur une surface intérieure (501) du pneumatique pour former des parties circulaires (62) annulaires parallèles à une direction circonférentielle de pneumatique à partir du matériau d'étanchéité (61), puis en déplaçant de manière relative la buse (100) dans la direction de largeur de pneumatique par rapport au pneumatique (1), tout en déversant le matériau d'étanchéité (61) à partir de la buse (100), puis en déversant le matériau d'étanchéité (61) à partir de la buse (100) sur la surface intérieure (501) du pneumatique (1), formant ainsi, à partir du matériau d'étanchéité (61), sur un côté dans la direction de largeur de pneumatique de ladite partie circulaire (62), une partie circulaire (62) suivante adjacente à ladite partie circulaire (62) pour former sur une surface intérieure (501) du pneumatique (1) une couche d'étanchéité (60) dans laquelle une pluralité de parties circulaires (62) sont agencées parallèlement dans la direction de largeur de pneumatique,
dans lequel une partie circulaire initiale (62A) sur un côté d'extrémité dans la direction de largeur de pneumatique et une partie circulaire finale (62B) sur un autre côté d'extrémité dans la direction de largeur de pneumatique parmi la pluralité de parties circulaires (62) ont respectivement une partie circulaire de chevauchement (62A1, 62B1) qui se chevauchent dans la direction d'épaisseur de pneumatique au niveau de la partie de transition (63),
dans lequel la couche d'absorption acoustique (70) est formée à partir d'un matériau d'absorption acoustique (71) enroulé le long de la direction circonférentielle de pneumatique sur une surface intérieure (601) de la couche d'étanchéité (60) et ayant une partie de jonction (71A) au niveau de laquelle se joignent des extrémités opposées l'une à l'autre dans la direction circonférentielle,
dans lequel des positions de la partie de jonction (71A) et de la partie circulaire de chevauchement (62A1, 62B1) diffèrent dans la direction circonférentielle de pneumatique, et
dans lequel les deux extrémités de la couche d'absorption acoustique (70) dans la direction de largeur de pneumatique sont situées plus vers un côté intérieur dans la direction de largeur de pneumatique que la partie circulaire de chevauchement (62A1, 62B1).
